# EUROPÄISCHE PATENTSCHRIFT

(11) **EP 1 969 017 B1**
(45) Veröffentlichungstag und Bekanntmachung des Hinweises auf die Patenterteilung: **25.11.2009**
(21) Anmeldenummer: 06830841.0
(22) Anmeldetag: 28.12.2006
(51) Int. Cl.: C08F 2/00, C08F 2/44

(54) **HERSTELLUNG EINES WASSERABSORBIERENDEN HARZES UNTER EINMISCHEN EINES TEILCHENFÖRMIGEN ADDITIVS**
PRODUCTION OF A WATER-ABSORBING RESIN TO WHICH A PARTICULATE ADDITIVE IS ADMIXED
PRODUCTION D'UNE RESINE ABSORBANT L'EAU PAR INCORPORATION D'UN ADDITIF PARTICULAIRE

(30) Priorität: 29.12.2005 DE 102005062929
(43) Veröffentlichungstag der Anmeldung: 17.09.2008
(73) Patentinhaber: BASF SE, 67056 Ludwigshafen (DE)
(72) Erfinder: STUEVEN, Uwe, 65812 Bad Soden (DE); DANIEL, Thomas, 67165 Waldsee (DE); FUNK, Rüdiger, 65527 Niedernhausen (DE); WEISMANTEL, Matthias, 63637 Jossgrund (DE); VAN ESBROECK, Dominicus, NL-4725 SN Wouse Plantage (NL); POSSEMIERS, Karl, B-2900 Schoten (BE); HILLEBRECHT, Annemarie, 36100 Petersberg (DE)
(86) Internationale Anmeldenummer: PCT/EP2006/070250
(87) Internationale Veröffentlichungsnummer: WO 2007/074167

(56) Entgegenhaltungen:
- EP-A1- 0 692 514
- EP-A1- 0 940 148
- US-A- 5 455 284

## Beschreibung

Die vorliegende Erfindung betrifft die Herstellung eines wasserabsorbierenden Harzes durch Polymerisation eines Reaktionsgemisches, das wenigstens ein hydrophiles Monomer und gegebenenfalls wenigstens einen Vernetzer umfasst, bei dem man in das Reaktionsgemisch ein teilchenförmiges Additiv einmischt.

Wasserabsorbierende Harze (im Folgenden auch als "Hydrogel-bildende Polymerisate" oder "Superabsorber" (Superabsorbing Polymers, SAP) bezeichnet) sind in der Lage, wässrige Flüssigkeiten unter Bildung eines Hydrogels zu absorbieren und dadurch zu binden. Sie finden daher insbesondere in Hygieneartikeln wie Windeln, Inkontinenzeinlagen und -hosen, Damenbinden und dergleichen zur Absorption wässriger Körperflüssigkeiten Verwendung. Einen umfassenden Überblick über Superabsorber, ihre Anwendung und ihre Herstellung gibt F.L. Buchholz und A.T. Graham (Herausgeber) in "Modern Superabsorbent Polymer Technology", Wiley-VCH, New York, 1998.

Wasserabsorbierende Harze werden durch Polymerisation mindestens eines hydrophilen Monomers, insbesondere Acrylsäure und/oder ihre Salze, erhalten. Die Polymerisate enthalten in der Regel herstellungsbedingt mehr oder weniger große Menge an flüchtigen bzw. eluierbaren Bestandteilen, insbesondere nicht umgesetzte Monomere (sogenannte Restmonomere) sowie wasserlösliche extrahierbare Komponenten.

Für die Anwendung der wasserabsorbierenden Harze in Hygieneartikeln werden grundsätzlich niedrige Gehalte an flüchtigen und eluierbaren Stoffen angestrebt. Darüber hinaus bewirken bereits geringste Mengen an extrahierbaren Anteilen eine Herabsetzung der Absorptionsleistung. Auch aus ökologischer Sicht ist eine Reduzierung dieser Bestandteile wünschenswert.

Aus dem Stand der Technik sind Methoden bekannt, bei der Produktion anfallendes Feingut ("Fines") zurückzuführen und in den laufenden Prozess wieder einzuschleusen. Bei dem Feingut handelt es sich in der Regel um hydrogel-bildende Polymerpartikel mit einer Teilchengröße von weniger als 300 µm, meist weniger als 100 µm, die aufgrund ihrer geringen Größe bei der Herstellung absorbierender Kerne für Hygieneartikel nicht verwendet werden können, da sie zu Dosierschwierigkeiten und Staubentwicklung führen sowie eine verminderte Quellkapazität aufweisen. Feinanteile in wasserabsorbierenden Harzen führen zu Produkten verringerter Quellkapazität, was durch das sogenannte Gelblocking, d. h. durch das Ausbilden einer schnell angequollenen Sperrschicht an der Partikeloberfläche verursacht wird, die einen Flüssigkeitstransport ins Innere der Partikel unterbindet. Aus diesem Grund werden polymere Feinanteile mit geringer Teilchengröße abgetrennt und nach Möglichkeit in den Produktionsprozess rückgeführt. Bei den bekannten Methoden der Rückführung erfolgt die Zumischung des rückgeführten Guts an lediglich einer Stelle.

Die EP-A 513 780 (DOW) beschreibt ein Verfahren zur Feingutrückführung in die Monomerlösung mit den folgenden Schritten: Abtrennung des Feinguts vom getrockneten und gesiebten Polymer, Einmischung des Feinguts in die Monomerlösung und Polymerisation der Mischung aus Feingut und Monomer. Als abgetrenntes Feingut werden Partikelgrößen von weniger als 200 µm eingesetzt. Die Menge des zugesetzten Feinguts beträgt bis zu 30 Gew.%, bezogen auf den Feststoffgehalt des Polymerisats.

Die WO 03/022896 (DOW) erwähnt die Möglichkeit der Feingutrückführung in einem kontinuierlichen Polymerisationsprozess, der in einem Reaktorsystem mit mindestens drei Reaktionszonen stattfindet. Die 3 Zonen umfassen eine Initiationszone, eine Gelphasenzone und eine Granulationszone. Das Feingut soll in die Initiierungszone zurückgeführt werden (Seite 9/Zeile 6 bis 7).

Die DE 4 021 847 (STOCKHAUSEN) beschreibt ein Verfahren zur Herstellung wasserquellbarer Produkte unter Verwendung von Feinstanteilen wasserquellbarer Polymerer, indem die Feinstanteile in einem bei Raumtemperatur flüssigen Monomeren, das die polymeren Feinstanteile nicht anquillt, dispergiert und durch Zugabe von Katalysatoren und/oder Belichtung polymerisiert werden, anschließend zerkleinert und getrocknet werden.

In der EP 496594 (NIPPON SHOKUBAI) wird Feingut (fines) in Polymergel eingearbeitet und im Kneter zerkleinert. 100 Gewichtsteile eines Polymergels werden mit 1-50 Gewichtsteilen eines feinteiligen hydrogel-bildenden Polymerpulver vermischt unter Verwendung eines Kneters, in dem das hydratisierte Gel durch Scherkraft fein zerteilt wird.

Die EP 01 426 402 (NIPPON SHOKUBAI) beschreibt die Rückführung von ausgeschleustem partikulären hydrogel-bildenden Material in den Verfahrensschritt der Mahlung und / oder der Oberflächennachbehandlung. Explizit wird auch die Möglichkeit der Einschleusung partikulären hydrogel-bildenden Materials in die laufende oder eine andere Produktion, erwähnt.

Aus verschiedenen Gründen ist die Einarbeitung von teilchenförmigen Füllstoffen, wie anorganischen Teilchen, in wasserabsorbierende Harze sinnvoll, z. B. zur Verbesserung der Gelstabilität, wodurch die Flüssigkeitspermeation erleichtert wird. Durch die Füllstoffe können auch die Dichte und/oder das Volumen der wasserabsorbierenden Harze gesteuert werden.

Beim Einarbeiten von teilchenförmigen Additiven, wie hydrogel-bildendem Feingut bzw. Füllstoffen, besteht die Gefahr, dass die Additive nur eine lockere Verbindung mit dem Harz eingehen und fragile Agglomerate bilden, die bei mechanischer Belastung, z. B. beim Umfüllen, zerbrechen und Staubbildung verursachen. Es ist wünschenswert, dass die Additive eine ausreichend feste Verbindung mit dem Harz eingehen, so dass beim Zerkleinern oder Umfüllen keine übermäßige Staubbildung auftritt.

Der vorliegenden Erfindung liegt somit die Aufgabe zugrunde, ein Verfahren zur Herstellung eines wasserabsorbierenden Harzes bereitzustellen, das einen geringen Gehalt an Restmonomeren, speziell an Restvernetzer, aufweist. Der Erfindung liegt außerdem die Aufgabe zugrunde, ein Verfahren zur Herstellung eines wasserabsorbierenden Harzes unter Rückführung von Feingut anzugeben, bei dem die Feingutrückführung nicht mit einer Verschlechterung der Eigenschaften des erhaltenen wasserabsorbierenden Harzes einhergeht.

Der Erfindung liegt ferner die Aufgabe zugrunde, ein Verfahren zur Herstellung eines wasserabsorbierenden Harzes bereitzustellen, mit dem Additive in das Harz eingearbeitet werden können und die Additive eine ausreichend feste Verbindung mit dem Harz eingehen, so dass bei mechanischer Belastung keine übermäßige Staubbildung auftritt.

Es wurde überraschend gefunden, dass sowohl der Restmonomergehalt, speziell der Restvernetzergehalt, als auch der Gehalt an Extrahierbaren nennenswert reduziert werden kann, wenn man parallel an zwei unterschiedlichen Stellen ein Harzpulver, z. B. rückgeführtes Feingut, in die Monomerlösung bzw. das polymerisierende Reaktionsgemisch einschleust. Es wurde ferner gefunden, dass auf diese Weise ein hoher Anteil an Feingut eingearbeitet werden kann, ohne die Eigenschaften des erhaltenen wasserabsorbierenden Harzes zu verschlechtern.

Desweiteren wurde überraschend gefunden, dass durch die beschriebene Zugabe des Harzpulvers an zwei unterschiedlichen Stellen eine deutlich verbesserte und homogenere Gelstruktur erhalten wird, was zu einer deutlichen Reduzierung von unerwünschten Gelklumpen, d. h. von Gelpartikeln mit einer Größe von mehr als 10 mm, führt.

Es wurde weiter gefunden, dass eine ausreichend feste Verbindung von zugegebenen Additiven mit dem Harz erhalten werden kann, wenn man die Additive parallel an zwei unterschiedlichen Stellen in die Monomerlösung bzw. das polymerisierende Reaktionsgemisch einschleust.

Die Erfindung betrifft ein Verfahren zur Herstellung eines wasserabsorbierenden Harzes durch Polymerisation eines Reaktionsgemisches, das wenigstens ein hydrophiles Monomer und gegebenenfalls wenigstens einen Vernetzer umfasst, in einem Reaktor, bei dem man in das Reaktionsgemisch wenigstens eine erste Portion eines teilchenförmigen Additivs einmischt, bevor das Reaktionsgemisch eine Verweilzeit von 40 % der gesamten Verweilzeit im Reaktor erreicht, und wenigstens eine zweite Portion eines teilchenförmigen Additivs einmischt, wenn das Reaktionsgemisch eine Verweilzeit von 45 % oder mehr der gesamten Verweilzeit im Reaktor erreicht hat, wobei das Additiv unter wasserabsorbierenden Harzpulvern, Füllstoffen und Gemischen- davon ausgewählt ist, der Gesamtfeststoffgehalt von Monomeren und Additiv 30 bis 60 Gew.-% beträgt, die Menge des Additivs 5 bis 50 Gew.-%, bezogen auf die Monomere, beträgt und das Gewichtsverhältnis der ersten Portion zur zweiten Portion des Additivs 10:1 bis 1:5 beträgt.

Vorzugsweise mischt man die erste Portion des Additivs ein, wenn das Reaktionsgemisch eine Verweilzeit von bis zu 30 %, insbesondere 15 bis 30 %, der gesamten Verweilzeit im Reaktor erreicht. Vorzugsweise mischt man die zweite Portion des Additivs ein, wenn das Reaktionsgemisch eine Verweilzeit von 50 bis 99 %, insbesondere 50 bis 80 % der gesamten Verweilzeit im Reaktor erreicht. Die erste Portion kann auch in eine Monomerlösung vor dem Zusatz eines radikalischen Initiators eingemischt werden.

Während der Polymerisation durchläuft das Reaktionsgemisch mehrere Stadien. Zu Beginn liegt eine vergleichsweise dünnflüssige wässrige Monomerlösung vor. Nach der Initiierung der Polymerisation steigt mit zunehmenden Polymerisationsgrad die Viskosität des Gemisches an. Mit weiterem Reaktionsfortschritt zerbröckelt das hochviskose Gel zu einem freifließenden Granulat.

Die Konzentration an hydrophilen Monomeren und Vernetzer in der wässrigen Monomerlösung beträgt beispielsweise 15 bis 50 Gew.-%. Die wässrige Monomerlösung kann eine geeignete Pfropfgrundlage enthalten. Der Gesamtfeststoffgehalt ist der Anteil der Trockenmasse an der Gesamtmasse des Reaktionsgemisches. Die Trockenmasse umfasst Monomere (bzw. daraus gebildetes Polymer) und Additiv.

Zwischen der Zugabe der ersten Portion und der zweiten Portion des Additivs erreicht das Reaktionsgemisch einen Umsatzfortschritt von vorzugsweise wenigstens 15 mol-%, insbesondere 30 mol-%, gerechnet als Umsatz bei der Zugabe der zweiten Portion abzüglich des Umsatzes bei der Zugabe der ersten Portion. Der Begriff "Umsatz" bezieht sich auf den Monomerumsatz der eingesetzten Monomere.

Obgleich in der Anmeldung von "erster und zweiter Portion" eines teilchenförmigen Additivs gesprochen wird, muss es sich nicht um ein identisches Material handeln, und die beiden Portionen können sich in der chemischen Zusammensetzung, der Teilchengrößenverteilung, dem Feuchtigkeitsgehalt unterscheiden. Ausführungen zu bevorzugten Additiven gelten unabhängig für die erste und zweite Portion. Die Zugabe der "ersten bzw. zweiten Portion" kann ihrerseits auf mehrere einzelne Dosierungen aufgeteilt sein; wichtig ist lediglich, dass die Gesamtheit des Additivs, die dem Reaktionsgemisch zugesetzt wird, während sich dieses innerhalb einer bestimmten Verweilzeitspanne befindet, den oben angegebenen Bedingungen genügt.

Das teilchenförmige Additiv kann als solches, d. h. als Pulver, oder in Form einer Suspension, vorzugsweise einer wässrigen Suspension, zugesetzt werden.

Bei dem Harzpulver kann es sich um partikuläres hydrogel-bildendes Polymermaterial der laufenden Produktion handeln, oder um Material, das aus einem anderen Produktionsprozess entstammt. Bei dem Harzpulver kann es sich um ein Hydrogel ohne jegliche Nachvernetzung oder ein oberflächennachvernetztes Material oder Gemische davon handeln. Werden als Harzpulver Gemische von nicht oberflächennachvernetzten Hydrogelen und oberflächennachvernetzten Hydrogelen eingesetzt, macht das nicht oberflächennachvernetzte Hydrogel vorzugsweise wenigstens 60 Gew.-%, insbesondere wenigstens 80 Gew.-% des Gemisches aus. Das Harzpulver weist in der Regel einen Feuchtigkeitsgehalt von 0,1 bis 10 Gew.-% auf, vorzugsweise von 1 bis 5 Gew.-%.

Das Harzpulver weist im Allgemeinen eine gewichtsmittlere Teilchengröße im Bereich von 10 bis 500 µm, bevorzugt 15 bis 300 µm, besonders bevorzugt 20 bis 150 µm auf. In einer bevorzugten Ausführungsfom der vorliegenden Erfindung handelt es sich bei dem Harzpulver um feinteiliges Rückgut, das aus dem laufenden Polymerisationsprozess ausgeschleust wird. Das Harzpulver weist vorzugsweise eine gewichtsmittlere Teilchengröße von weniger als 200 µm auf, insbesondere von weniger als 150 µm. In der Regel weisen wenigstens 90 Gew.-% der Teilchen des Harzpulvers eine Teilchengröße von weniger als 150 µm auf, vorzugsweise weisen wenigstens 90 Gew.-% der Teilchen eine Teilchengröße von weniger als 100 µm auf.

In einer weiteren Ausführungsform der vorliegenden Erfindung handelt es sich bei dem Harzpulver um Polymermaterial, das einem anderen Produktionsprozess entnommen wurde, und worin wenigstens 90 Gew.-% der Teilchen eine Teilchengröße von 200 bis 700 µm aufweisen.

Bei den erfindungsgemäß verwendeten Füllstoffen handelt sich um feinteilige, unter den Herstellungsbedingungen der wasserabsorbierenden Harze inerte, pulverförmige oder faserige Stoffe, die organischer oder anorganischer Natur sein können.

Beispiele für solche Füllstoffe sind anorganische Teilchen, wie Tonminerale, Polykieselsäuren, Zeolithe, Aktivkohle, wasserunlösliche Metallphosphate, Metalloxide, Metallcarbonate und Gemische davon.

Bevorzugte Tonminerale sind insbesondere Silikate mit Band-, Ketten- oder Blattstruktur, z. B. Montmorillonit, Kaolin, Bentonite, Talk, Bleicherden.

Geeignete Polykieselsäuren sind Fällungskieselsäuren oder pyrogene Kieselsäuren. Diese sind unter dem Namen AEROSIL® (pyrogene Kieselsäuren) bzw. Silica FK, Sipernat®, Wessalon® (Fällungskieselsäure) kommerziell erhältlich. Besonders bevorzugt ist der Einsatz von Fällungskieselsäuren.

Zum Einsatz können auch wasserunlösliche Metallphosphate, beispielsweise der allgemeinen Formel M₄P₂O₇, M₂HPO₄, M₃PO₄; M = Calcium, Magnesium, Strontium, Barium, Zink, Eisen, Aluminium, Titan, Zirkonium, Hafnium, Zinn, Cer, Scandium, Yttrium oder Lanthan oder Gemische davon, gelangen. Zu den geeigneten wasserunlöslichen Metallphosphaten zählen auch solche Phosphate, die im technischen Sinn als "Phosphate" angesehen werden können, und z.B. als gemischte Phosphat-Oxide, Phosphat-Hydroxide, Phosphat-Silicate, Phosphat-Fluoride oder dergleichen aufgefasst werden können.

Als wasserunlösliche Metalloxide können feinteiliges Siliciumdioxid, Titandioxid, Zirkondioxid, Magnesiumoxid, Aluminiumoxid und Eisenoxid Einsatz finden; als wasserunlösliches Metallcarbonat Calciumcarbonat.

Daneben können auch Glasmikroperlen, Sand oder Glasfasern verwendet werden.

Als inertes partikuläres Material auf organischer Basis können beispielsweise Polyalkylmethacrylate, Polyvinylchlorid, Cellulose, mikrokristalline Cellulose, Guarkernmehl, Tarakernmehl, Johannisbrotkernmehl, alle Arten von Stärken, synthetische und natürliche Fasern Einsatz finden.

Die erfindungsgemäß verwendeten Füllstoffe weisen eine mittlere Partikelgröße im Bereich von bis zu 500 µm auf, z. B. 10 bis 500 µm, bevorzugt 15 bis 300 µm, besonders bevorzugt 20 bis 150 µm, gemessen mittels Laserbeugung.

Im erfindungsgemäßen Verfahren beträgt die insgesamt zugegebene Menge des Additivs 5 bis 50 Gew.-%, vorzugsweise 15 bis 40 Gew.-%, bezogen auf die Monomere (hydrophiles Monomer und Vernetzer), die in der eingesetzten Monomerlösung vor Initiierung der Polymerisation vorliegen. Das Gewichtsverhältnis der ersten Portion zur zweiten Portion des Additivs beträgt 10:1 bis 1:5, vorzugsweise 5:1 bis 1:1.

Der Anteil des Harzpulvers an der insgesamt zugegebenen Menge des Additivs beträgt vorzugsweise wenigstens 45 Gew.-%, z. B. 50 bis 95 Gew.-%, insbesondere 75 bis 90 Gew.-%. In bestimmten Ausführungsformen besteht das Additiv ausschließlich aus Harzpulver.

In einer bevorzugten Ausführungsform des erfindungsgemäßen Verfahrens umfasst die erste Portion des Additivs ausschließlich Harzpulver und die zweite Portion des Additivs ein Gemisch von Harzpulver und Füllstoffen, insbesondere anorganischen Teilchen.

In einer anderen bevorzugten Ausführungsform des erfindungsgemäßen Verfahrens umfassen sowohl die erste Portion des Additivs als auch die zweite Portion des Additivs ein Gemisch von Harzpulver und Füllstoffen, insbesondere anorganischen Teilchen.

Das erfindungsgemäße Verfahren ist sowohl als kontinuierliches Verfahren als auch als diskontinuierlicher Prozess durchführbar. Die Polymerisation erfolgt vorzugsweise unter fortwährender Einwirkung von Scherkräften, die das Reaktionsgemisch durchmischen und das gebildete Gel kontinuierlich zerkleinern. Die Scherkräfte sorgen gleichzeitig für eine gute Einmischung des Additivs. Geeignete Reaktionsapparate sind Kneter, worin in der Regel gegenläufige Rührwellen Scherkräfte erzeugen.

Im diskontinuierlichen Betrieb werden die oben geschilderten Stadien zeitlich nacheinander durchlaufen. Beim diskontinuierlichen Betrieb wird als Verweilzeit im Reaktor die Zeit vom Vermischen von Monomerlösung und Initiator bis zum Erreichen eines Umsatzes von 98 % angesehen. Die erste und die zweite Portion des Additivs werden zu unterschiedlichen Zeitpunkten in das Reaktionsgemisch eingemischt. So kann die erste Zugabe beispielsweise in die Monomerlösung erfolgen, gefolgt von der zweiten Zugabe nach einer ausreichenden Zeitdifferenz, in der Umsatz so weit fortgeschritten ist, dass das zunächst erhaltene hochviskose Gel zu einem Granulat zerbröckelt.

Im kontinuierlichen Verfahren erfolgt die Zugabe der ersten und zweiten Portion des Additivs an unterschiedlichen geometrischen Orten. Typischerweise umfasst ein Reaktorsystem für den kontinuierlichen Polymerisationsprozess mindestens drei Reaktionszonen, nämlich eine erste Zone oder Initiationszone, eine zweite Zone oder Gelphasenzone und eine dritte Zone oder Granulationszone (vgl. WO 03/22896). Die erste Zone enthält entweder eine einheitliche Lösungsphase oder ein zweiphasiges niedrigviskoses System aus flüssiger Monomerlösung und teilpolymerisiertem Polymer. Die Verweilzeit in der ersten Zone beträgt 20 bis 50 % der gesamten Verweilzeit in allen Reaktionszonen. In der sich anschließenden zweiten Zone befindet sich das hochviskose Polymergel; zum Ende der zweiten Zone ist ein Umsatz von 50 bis 75 % erreicht. Die Verweilzeit in der zweiten Zone beträgt 20 bis 50 % der gesamten Verweilzeit in allen Reaktionszonen. Die Grenze zur dritten Reaktionszone ist mit einem Übergang von hochviskosem Gel in ein relativ frei fließendes Gelgranulat verbunden. Hier ist der Polymerisationsprozess schon fast abgeschlossen, und der Umsatz beträgt beim Austritt des Polymergels aus dem Reaktor bei mindestens 98 %, kann allerdings bis zu 99,9 % betragen oder noch höher sein. Die Verweilzeit in der dritten Zone beträgt 10 bis 60 % der gesamten Verweilzeit in allen Reaktionszonen. Die gesamte Verweilzeit in allen Reaktionszonen liegt bei 100 %. Die drei Reaktionszonen können sich in einem Reaktorsystem befinden, oder alternativ kann die erste Zone in einem separaten Reaktor und die zweite und dritte Zone in einem weiteren Reaktor untergebracht sein.

Der Monomerumsatz an einer Position im Reaktor steht in direkter Korrelation mit der Verweilzeit im Reaktor. Die Verweilzeit wird wiederum bestimmt durch den Reaktor-Durchsatz, den Füllgrad des Reaktors sowie die Polymerisationskinetik, insbesondere dem Gelpunkt, d. h. dem Monomerumsatz, bei dem die flüssige Monomerphase.in die Gelphase übergeht.

Entsprechend der obigen Definition kann die erste Zugabe des Additivs in die Initiierungszone erfolgen. Die weitere Zudosierung des Additivs erfolgt vorzugsweise am Übergang von der zweiten zur dritten Zone oder in die dritte Zone.

Zur Durchführung des erfindungsgemäßen Verfahrens haben sich Zweiwellenextruder der Bezeichnung ORP Conti der Firma List AG, Arisdorf, Schweiz, bewährt. In einem Gehäuse mit dem Querschnitt einer liegenden Acht rotieren zwei parallel arbeitende, sich überschneidende Rührwellen, die als Haupt- und Putzwelle bezeichnet werden. Knetelemente auf der Haupt- und der Putzwelle ergeben eine schonende Misch- und Knetwirkung. Auf die Hauptwelle sind scheibenförmige Elemente radial aufgesetzt, die am Umfang durch Misch- und Knetbarren verbunden sind. Parallel dazu rotiert im Gehäuse die Putzwelle mit Knetrahmen, deren Konstruktion und Umlaufgeschwindigkeit so gewählt sind, dass sie zwischen die scheibenförmigen Elemente der Hauptwelle eingreifen und deren Flachen laufend reinigen. Der äußerste, achsparallele Teil des Rahmens, reinigt die Innenfläche des Gehäuses und die Hauptwelle, bildet aber außerdem zusammen mit dem Knetbarren der Hauptwelle ein sehr wirksames Misch- und Knetelement. Die Schrägstellung der Knetbarren und der Rahmen ergibt ähnlich einer Schnecke eine Axialkraft, die das Produkt durch die die Maschine transportiert.

In einer bevorzugten Ausführungsform des erfindungsgemäßen Verfahrens führt man eine wässrige Monomerlösung dem Aufgabeende eines kontinuierlichen betriebenen Reaktors mit wenigstens zwei achsparallel rotierenden Wellen zu, worin das Reaktionsgemisch mit fortschreitender Polymerisation vom Aufgabeende zum Ausgabeende des Reaktors befördert wird, und mischt die erste Portion und die zweite Portion des Additivs an zwei in Förderrichtung der Monomerlösung beabstandet zueinander angeordneten Stellen des Reaktors ein.

Das erfindungsgemäße Verfahren geht von einer wässrigen Monomerlösung aus, die wenigstens ein hydrophiles Monomer und wenigstens einen Vernetzer umfasst. Geeignete hydrophile Monomere sind dem Fachmann bekannt, beispielsweise polymerisationsfähige Säuren, wie Acrylsäure, Methacrylsäure, Vinylsulfonsäure, Styrolsulfonsäure, Vinylphosphonsäure, Maleinsäure einschliesslich deren Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen-oder ammoniumgruppenhaltige Ester und Amide sowie die Alkalimetall- und/oder Ammoniumsalze der Säuregruppen enthaltenden Monomeren. Des weiteren eignen sich wasserlösliche N-Vinylamide wie N-Vinylformamid oder Diallyldimethyl-ammoniumchlorid.

Bevorzugte hydrophile Monomere sind Säuregruppen tragende Monomere, vorzugsweise teilneutralisiert, d. h. 35 bis 100%, z. B. 50 bis 100%, bevorzugt 60 bis 90% oder 55 bis 75, der Säuregruppen sind neutralisiert.

Besonders bevorzugte hydrophile Monomere sind Acrylsäure und Methacrylsäure, sowie deren Alkalimetall- oder Ammoniumsalze, beispielsweise Natriumacrylat, Kaliumacrylat oder Ammoniumacrylat. In besonders bevorzugten Ausführungsformen umfasst das hydrophile Monomer teilneutralisierte Acrylsäure.

Geeignete Pfropfgrundlagen können natürlichen oder synthetischen Ursprungs sein. Beispiele sind Stärke, Cellulose oder Cellulosederivate sowie andere Polysaccharide und Oligosaccharide, Polyvinylalkohol, Polyalkylenoxide, insbesondere Polyethylenoxide und Polypropylenoxide, Polyamine, Polyamide sowie hydrophile Polyester.

Als Vernetzer kommen vor allem Verbindungen in Betracht, die 2, 3, 4 oder 5 ethylenisch ungesättigte Doppelbindungen im Molekül aufweisen, die untereinander auch konjugiert können. Beispiele geeigneter Vernetzer sind N,N'-Methylenbisacrylamid, Polyethylenglykoldiacrylate und Polyethylenglykoldimethacrylate, die sich jeweils von Polyethylenglykolen eines zahlenmittleren Molekulargewichts von 106 bis 8500, vorzugsweise 400 bis 2000, ableiten, Trimethylolpropantriacrylat, Trimethylolpropantrimethacrylat, Ethylenglykoldiacrylat, Ethylenglykoldimethacrylat, Propylenglykoldiacrylat, Propylenglykoldimethacrylat, Butandiolacrylat, Butandioldimethacrylat, Hexandioldiacrylat, Hexandioldimethacrylat, Diethylenglykoldiacrylat, Diethylenglykoldimethacrylat, Triethylenglykoldiacrylat, Triethylenglykoldimethacrylat, Dipropylenglykoldiacrylat, Dipropylglykoldimethacrylat, Tripropylenglykoldiacrylat, Tripropylenglykoldimethacrylat, Allylmethacrylat, Diacrylate und Dimethacrylate von Blockcopolymerisaten aus Ethylenoxid und Propylenoxid, zwei-, drei-, vier- oder fünffach mit Acrylsäure oder Methacrylsäure veresterte mehrwertige Alkohole, wie Glycerin, Trimethylolpropan, Pentarythrit oder Dipentaerythrit, Ester monoethylenisch ungesättigter Carbonsäuren mit ethylenisch ungesättigten Alkoholen wie Allylalkohol, Cyclohexanol und Dicyclopentylalkohol, z. B. Allylacrylat und Allylmethacrylat, weiterhin Triallylamin, Dialkyldiallylammoniumhalogenide wie Dimethyldiallylammoniumchlorid und Diethyldiallylammoniumchlorid, Tetraallylethylendiamin, Divinylbenzol, Diallylphthalat, Polyethylenglykoldivinylether von Polyethylenglykolen eines zahlenmittleren Molekulargewichtes von 106 bis 4000, Trimethylolpropandiallylether, Bütandioldivinylether, Pentaerythrittriallylether, Umsetzungsprodukte von 1 Mol Ethylenglykoldiglycidylether oder Polyethylenglykoldiglycidylether mit 2 Mol Pentaerythritoltriallylether oder Allylalkohol, und Divinylethylenharnstoff.

Weiterhin können nicht-vinylische Vernetzer verwendet werden. Diese verfügen über wenigstens zwei funktionelle Gruppen, die mit Carboxylgruppen des Polymers reagieren können, wie Glycerin, Polyglycole, Ethylenglycol, Digylcidylether und Diamine. Beispiele derartiger Vernetzer finden sich in den US-Patentschriften Nr. 4,666,983, 4,734,478 und 5,145,906. Bevorzugte nicht-vinylische Vernetzer sind Hexandiamin, Glycerin, Ethylenglycoldiglycidylether, Ethylenglycoldiacetat, Polyethylenglycol 400, Polyethylenglycol 600 und Polyethylenglycol 1000. Die am meisten bevorzugten nichtvinylischen Vernetzer sind Polyethylenglycol 400 und Polyethylenglycol 600.

Dimodale Vernetzer können ebenfalls zum Einsatz kommen. Es sind Verbindungen, die über wenigstens eine ethylenisch ungesättigte Doppelbindung und wenigstens eine gegenüber Carboxylgruppen reaktive funktionelle Gruppe verfügen. Zur Unterscheidung von normalen Vernetzern mit mehreren ethylenisch ungesättigten Doppelbindungen werden diese Verbindungen als "dimodale Vernetzer" bezeichnet, weil sie zwei unterschiedliche Vernetzungsmechanismen verwenden. Geeignete dimodale Vernetzer umfassen Hydroxyethyl(meth)acrylat, Polyethylenglycolmonomethacrylat, Glycidylmethacrylat und Allylglycidylether. Die in den US-Patenschriften 4,962,172 und 5,147,956 beschriebenen Verbindungen sind als dimodale Vernetzer geeignet. Bevorzugte dimodale Vernetzer sind Hydroxyethyl(meth)acrylat, Polyethylenglycol 400-monomethacrylat, Glycidylmethacrylat. Der am meisten bevorzugte dimodale Vernetzer ist Hydroxyethyl(meth)acrylat.

Typischerweise verwendet man 0,01 bis 5 Gew.-% Vernetzer, meist 0,1 bis 1,2 Gew.-% und insbesondere 0,4 bis 0,9 Gew.-%, bezogen auf das hydrophile Monomer.

Die Polymerisationsreaktion kann im Temperaturbereich von 20 bis 150 °C, vorzugsweise 30 bis 100 °C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff und/oder Wasserdampf, ausgeführt werden. Zur Initiierung der Polymerisation können energiereiche elektromagnetische Strahlen oder die üblichen chemischen Polymerisationsinitiatoren herangezogen werden, beispielsweise organische Peroxide, wie Benzoylperoxid, tert-Butylhydroperoxid, Methylethylketonperoxid, Cumolhydroperoxid, Azoverbindungen wie Azodüsobutyronitril sowie anorganische Peroxoverbindungen wie (NH₄)₂S₂O₈ oder K₂S₂O₈ oder H₂O₂. Bevorzugte Redoxininitiatorsysteme sind wasserlöslich und enthalten als oxidierende Komponente mindestens eine der oben angegebenen Peroxoverbindungen und als reduzierende Komponente beispielsweise Ascorbinsäure, Glukose, Sorbose, ein Ammonium- oder Alkalimetallsulfit, -hydrogensulfit, -thiosulfat, -hyposulfit, -pyrosulfit oder -sulfid, Metallsalze wie Eisen(II)-ionen oder Natriumhydroxymethylsulfoxylat. Vorzugsweise verwendet man als reduzierende Komponente des Redoxinitiatorsystems Ascorbinsäure oder Natriumsulfit.

Die Gelmasse wird auf übliche Weise getrocknet, z. B. mit einem Band- oder Walzentrockner oder Fluidbed-Trockner, bis der Restfeuchtigkeitsgehalt vorzugsweise-unter 10 Gew.-%, insbesondere zwischen 1 bis 5 Gew.-% liegt. Das getrocknete Hydrogel wird hiernach gemahlen und gesiebt, wobei zur Mahlung üblicherweise Walzenstühle, Stiftmühlen, Schwingmühlen, Hammermühlen oder Schneidmühlen eingesetzt werden können. Teilchenfraktionen mit einer Teilchengröße, die kleiner ist als eine vorbestimmte Mindestteilchengröße, können als zurückgeführt und als Harzpulver in das erfindungsgemäße Verfahren zurückgeführt werden. Typischerweise weisen die zur Weiterverarbeitung vorgesehenen Partikel eine Teilchengröße im Bereich von 100 bis 1000 µm auf, meist 100 bis 850 µm.

In einer bevorzugten Ausführung der vorliegenden Erfindung werden die Absorptionseigenschaften der erfindungsgemäßen wasserabsorbierenden Harze durch eine anschließende Oberflächennachvernetzung weiter verbessert. Durch die Oberflächennachvernetzung steigt die Vernetzungsdichte nahe der Oberfläche der Harzteilchen, wodurch die Absorption unter Druckbelastung auf ein höheres Niveau gehoben wird.

Die Oberflächennachvernetzung erfolgt in an sich bekannter Weise mit den so erhaltenen, getrockneten, vorzugsweise gemahlenen und abgesiebten Polymerpartikeln. Zur Oberflächenvernetzung werden Verbindungen eingesetzt, die wenigstens zwei funktionelle Gruppen aufweisen, die mit den funktionellen Gruppen, vorzugsweise den Carboxylgruppen des Harzes unter Vernetzung reagieren können (Nachvernetzungsmittel). Hierzu werden die Nachvernetzungsmittel, vorzugsweise in Form einer Lösung, auf die Oberfläche der Polymerisat-Partikel aufgebracht. Die Lösung kann wassermischbare organische Lösungsmittel enthalten. Geeignete Lösungsmittel sind z. B. C₁-C₄-Alkohole wie Methanol, Ethanol, Isopropanol, Propylenglykol, Ethylenglykol oder Ketone wie Aceton und Methylethylketon. Besonders bevorzugt sind wässrige Lösungen solcher Alkohole, wobei der Alkoholgehalt der Lösung 10 bis 90 Gew. -%, besonders bevorzugt zwischen 25 bis 70 Gew.-%, insbesondere zwischen 30 bis 50 Gew.-% beträgt. Der Oberflächennachvernetzer wird dabei in einer Menge von.0,01 bis 1 Gew.-%, bezogen auf das eingesetzte Polymer, verwendet, und die Vernetzerlösung selbst in einer Menge von 1 bis 20 Gew. -%, bevorzugt 3 bis 15 Gew. -%, bezogen auf das eingesetzte Harz, verwendet.

### Geeignete Nachvernetzungsmittel sind beispielsweise:

Di- oder Polyglycidylverbindungen wie Phosphonsäurediglycidylether oder Ethylenglykoldiglycidylether, Bischlorhydrinether von Polyalkylenglykolen; Alkoxysilylverbindungen; Polyaziridine, Aziridin-Einheiten enthaltende Verbindungen auf Basis von Polyethern oder substituierten Kohlenwasserstoffen, beispielsweise Bis-N-aziridinomethan; Polyamine oder Polyamidoamine sowie deren Umsetzungsprodukte mit Epichlorhydrin; Diole und Polyole, z. B. Ethylenglycol, 1,2-Propandiol, 1,4-Butandiol, Glycerin, Methyltriglykol, Trimethylolethan, Trimethylolpropan, Polyethylenglykole mit einem mittleren Molekulargewicht MW von 200 bis 10000, Di- und Polyglycerin, Pentaerythrit, Sorbit, die Oxethylate dieser Polyole sowie deren Ester mit Carbonsäuren oder mit Kohlensäure wie Ethylencarbonat oder Propylencarbonat; Kohlensäurederivate wie Harnstoff, Thioharnstoff, Guanidin, Dicyandiamid, 2-Oxazolidinon und dessen Derivate, Bisoxazolin, Polyoxazoline, Di- und Polyisocyanate; Di- und Poly-N-methylolverbindungen wie beispielsweise Methylenbis(N-methylol-methacrylamid) oder Melamin-Formaldehyd-Harze; Verbindungen mit zwei oder mehr blockierten Isocyanat-Gruppen wie beispielsweise Trimethylhexamethylendüsocyanat blockiert mit 2,2,3,6-Tetramethyl-piperidinon-4; und 2-Oxazolidone, wie 2-Oxazolidinon oder N-Hydroxyethyl-2-oxazolidinon, Morpholin-2,3-dione, wie N-2- Hydroxyethyl-morpholin-2,3-dion, N-Methyl-morpholin-2,3-dion , N-Ethyl-morpholin-2,3- dion und/oder N-tert-Butyl-morpholin-2,3-dion, 2-Oxotetrahydro-1,3-oxazin, N-Acyl-2-oxazolidone, wie N-Acetyl-2-oxazolidon, bicyclische Amidacetale, wie 5-Methyl-1-aza-4,6-dioxa-bicyclo [3.3.0]octan, 1-Aza-4,6-dioxa-bicyclo[3.3.0]octan und/oder 5-Isopropyl-1-aza-4,6-dioxa-bicyclo[3.3.0]-octan, und/oder Bis- und Poly-2-oxazolidinone.

Bei Bedarf können saure Katalysatoren wie p-Toluolsulfonsäure, Phosphorsäure, Borsäure oder Ammoniumdihydrogenphosphat zugesetzt werden.

Das Aufbringen der Vernetzer-Lösung erfolgt bevorzugt durch Aufsprühen einer Lösung des Vernetzers mittels herkömmlicher Reaktionsmischer oder Misch- und Trocknungsanlagen wie beispielsweise Patterson-Kelly-Mischer, DRAIS-Turbulenzmischer, Lödige-Mischer, Schneckenmischer, Tellermischer, Wirbelschichtmischer und Schugi/Flexo-Mix. Nach Aufsprühen der Vernetzer-Lösung erfolgt in der Regel ein Temperaturbehandlungsschritt, bevorzugt in einem nachgeschalteten Trockner und bei einer Temperatur zwischen 80 und 230 °C, besonders bevorzugt 80 bis 190 °C, und ganz besonders bevorzugt zwischen 100 und 160 °C oder 170 bis 190 °C und über einen Zeitraum von 5 Minuten bis 6 Stunden, bevorzugt 10 Minuten bis 2 Stunden und besonders bevorzugt 10 Minuten bis 1 Stunde, wobei sowohl Spaltprodukte als auch Lösungsmittelanteile entfernt werden können. Die Trocknung kann aber auch im Mischer selbst erfolgen, beispielsweise durch Beheizen des Mantels oder Einblasen eines vorgewärmten Trägergases. Nach der Wärmebehandlung kann man erneut sieben und Teilchen, die eine vorbestimmte Mindestteilchengröße unterschreiten, können abgetrennt und als Harzpulver in das erfindungsgemäße Verfahren zurückgeführt werden.

Das wasserabsorbierende Harz kann weiteren optionalen Modifikationen unterzogen werden. In einer Ausführungsform der Erfindung wird zusätlich die Hydrophilie der Partikeloberfläche der Polymeren durch Ausbildung von Komplexen modifiziert. Die Bildung der Komplexe auf der äußeren Schale der Hydrogelpartikel erfolgt durch Aufsprühen von Lösungen zwei- oder mehrwertiger Metallsalz-Lösungen, wobei die Metall-Kationen mit den Säuregruppen des Polymers unter Ausbildung von Komplexen reagieren können. Beispiele für zwei- oder mehrwertige Metall-Kationen sind Mg²⁺, Ca²⁺ , Al³⁺, Sc³⁺, Ti⁴⁺, Mn²⁺, Fe^{2+/3+}, Co²⁺, Ni²⁺, Cu^{+/2+}, Zn²⁺, Y³⁺, Zr⁴⁺, Ag⁺, La³⁺, Ce⁴⁺, Hf⁴⁺, und Au^{+/3+}, bevorzugte Metall-Kationen sind Mg²⁺, Ca²⁺, Al³⁺ , Ti⁴⁺, Zr⁴⁺ und La³⁺, und besonders bevorzugte Metall-Kationen sind Al³⁺, Ti⁴⁺und Zr⁴⁺. Die Metall-Kationen können sowohl allein als auch im Gemisch untereinander eingesetzt werden. Von den genannten Metall-Kationen sind alle Metallsalze geeignet, die eine ausreichende Löslichkeit in dem zu verwendenden Lösungsmittel besitzen. Besonders geeignet sind Metallsalze mit schwach komplexierenden Anionen wie zum Beispiel Chlorid, Nitrat und Sulfat. Als Lösungsmittel für die Metallsalze können Wasser, Alkohole, DMF, DMSO sowie Mischungen dieser Komponenten eingesetzt werden. Besonders bevorzugt sind Wasser und Wasser/Alkohol-Mischungen wie zum Beispiel Wasser/Methanol oder Wasser/1,2-Propandiol. Das Aufsprühen der Salzlösung kann sowohl vor als auch nach der Oberflächennachvernetzung der Partikel erfolgen. In einem besonders bevorzugten Verfahren erfolgt das Aufsprühen der Salz-Lösung im gleichen Schritt mit dem Aufsprühen der Vernetzer-Lösung, wobei beide Lösungen getrennt nacheinander oder gleichzeitig über zwei oder mehrere Düsen aufgesprüht werden, oder Vernetzer- und Salz-Lösung vereint über eine Düse aufgesprüht werden können. Beim Aufsprühen der Vernetzerlösung und/oder der Lösung des zwei- oder mehrwertigen Metallsalzes kann das wasserabsorbierende Harz eine Temperatur von 20 bis 90 °C, vorzugsweise 25 bis 60 °C, z. B. etwa 40 °C aufweisen.

Optional kann noch eine weitere Modifizierung der hydrogel-formenden Polymere durch Zumischung feinteiliger anorganischer Feststoffe, wie zum Beispiel Silica, Aluminiumoxid, Titandioxid und Eisen(11)-oxid erfolgen, wodurch die Effekte der Oberflächennachbehandlung noch weiter verstärkt werden. Besonders bevorzugt ist die Zumischung von hydrophilem Silica oder von Aluminiumoxid mit einer mittleren Größe der Primärteilchen von 4 bis 50 nm und einer spezifischen Oberfläche von 50 - 450 m²/g. Die Zumischung feinteiliger anorganischer Feststoffe erfolgt bevorzugt nach der Oberflächenmodifizierung durch Vernetzung/Komplexbildung, kann aber auch vor oder während diesen-Oberflächenmodifizierungen durchgeführt werden.

Die vorliegende Erfindung betrifft ferner die Verwendung der oben genannten hydrogel-bildenden Polymere in Hygieneartikein. Typische Hygieneartikel umfassen:
(A) eine obere flüssigkeitsdurchlässige Abdeckung,
(B) eine untere flüssigkeitsundurchlässige Schicht,
(C) einen zwischen (A) und (B) befindlichen Kern, bestehend aus einer Mischung des erfindungsgemäß erhaltenen wasserabsorbierenden Harzes und hydrophilem Fasermaterial,
(D) gegebenenfalls eine sich unmittelbar oberhalb und unterhalb des Kerns (C) befindende Tissueschicht, und
(E) gegebenenfalls eine zwischen (A) und (C) sich befindende Aufnahmeschicht.

Die Erfindung wird durch die folgenden Beispiele und die beigefügte Figur näher veranschaulicht.

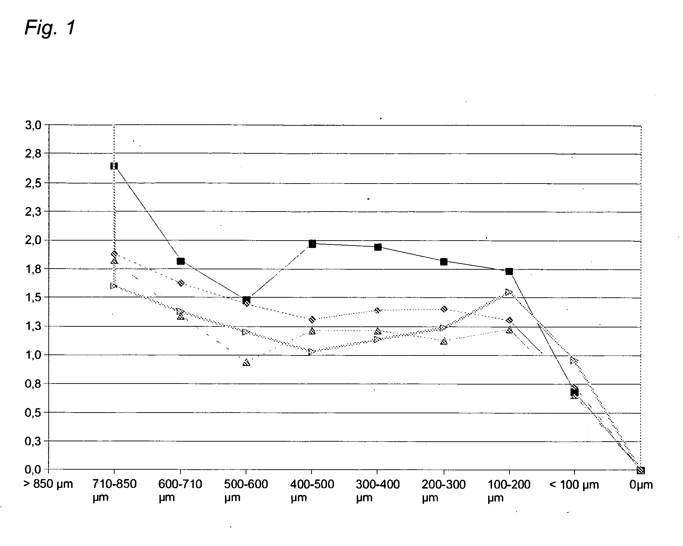

Fig. 1 zeigt die Teilchengrößenverteilung der Teilchenfraktion < 850 µm erfindungsgemäß hergestellter Polymere und von Vergleichspolymeren nach einer Grobzerkleinerung.

### Beispiele

### Testmethoden

### Zentrifugenretentionskapazität (CRC Centrifuge Retention Capacity)

Die Zentrifugenretentionskapazität der wasserabsorbierenden Polymerpartikel wird gemäß der von der EDANA empfohlenen Testmethode Nr. 441.2-02 "Centrifuge retention capacity" bestimmt.

### Absorption unter Gewichtsbelastung AUP 0,7 psi (4826,5 Pa).

Die Absorption unter Druck der wasserabsorbierenden Polymerpartikel wird gemäß der von der EDANA (European Disposables and Nonwovens Association) empfohlenen Testmethode Nr. 442.2-02 " Absorption under pressure" bestimmt, wobei jedoch das Gesamtgewicht Plastikstempel + Metallgewicht nicht wie in der Methode beschrieben 574g +/-5g (21,0g/cm² = 0,30psi ), sondern 1345g +/-1g (49,2g/cm² = 0,70psi ) beträgt.

### Extrahierbare Anteile

Die extrahierbaren Anteile der wasserabsorbierenden Polymerpartikel werden gemäß der von der EDANA empfohlenen Testmethode Nr. 470.2-02 " Extractables" bestimmt.

### Restmonomer / Restvernetzer

Der Gehalt an Restmonomeren (Acrylsäure) der wasserabsorbierenden Polymere wird gemäß der von der EDANA empfohlenen Testmethode Nr. 410.2-02 "Residual monomers" bestimmt.

Die Bestimmung des Restvernetzers (Polyethylenglykoldiacrylat ) erfolgte nach einer HPLC-Methode.

Die EDANA-Testmethoden sind beispielsweise erhältlich bei der EDANA, Avenue Eugene Plasky 157, B-1030 Brüssel, Belgien (www.edana.org).

### Referenzbeispiel 1: Herstellung eines Harzpulvers

Man verwendete eine 40 Gew.-%-ige wässrige Monomerlösung aus Acrylsäure und Natriumacrylat, entsprechend einem Neutralisationsgrad der Acrylsäure von 77 mol-%. Als Vernetzer wurde Polyethylenglykol-400-diacrylat (Cray Valley) in einer Einsatzmenge von 0,45 Gew.-%, bezogen auf Acrylsäure, verwendet. Der Vernetzer wurde zusammen mit der wässrigen Monomerlösung gemischt und diese Lösung durch Einleiten von Stickstoff inertisiert. Zur Initiierung der Polymerisation wurde folgendes System verwendet: 0,005 Gew.-% Wasserstoffperoxid und 0,006 Gew.-% Ascorbinsäure und 0,28 Gew.-% Natriumperoxodisulfat, wobei alle Mengenangaben auf Acrylsäure bezogen sind.

Die einzelnen Komponenten des Initiators und 600 kg/h Monomer/Vemetzerlösung wurden getrennt in einen Knetreaktor (List ORP 250 Contikneter Fa. List, Arisdorf, Schweiz) eindosiert und dort während des Einlaufens im Reaktor gemischt, wobei die Polymerisation schon während des Mischens zügig startete. Das im Kneter durch Polymerisation erzeugte Gel wurde kontinuierlich ausgetragen. Die Temperatur des Kühlwassers im Mantel betrug 40 °C bei einem gesamten Kühlwasserdurchsatz durch den Mantel von 12 m³/h. Während der Polymerisation wurden 14 m³/h Stickstoff durch diesen Kneter geführt. Das Reaktionsvolumen betrug 300 l.

Die Reaktionslösung hatte am Zulauf eine Temperatur von 23,5 °C, und das Produktgel besaß am Austrag eine Temperatur von 64,5 °C. Es wurden maximale Produkttemperaturen von weniger als 80 °C im Reaktor gemessen. Die Verweilzeit des Produkts im Reaktor betrug unter 15 min.

Das Gel wurde getrocknet, gemahlen und durch Sieben wurde eine Korngrößenfraktion von 100 bis 800 µm erhalten. Das getrocknete Polymer besaß eine Zentrifugenretentionskapazität CRC von 38,8 g/g. Der Restmonomergehalt lag bei 1230 ppm, der Restvernetzergehalt bei etwa 50 ppm, die extrahierbaren Anteile bei 18 %.

Die Fraktion mit einer Kornverteilung von weniger als 100 µm wurde dem in Vergleichsbeispiel 2 und Beispiel 1 beschriebenen Verfahren in der dort angegebenen Weise und Menge zugesetzt.

### Vergleichsbeispiel 2:

Die Herstellung erfolgte analog dem Referenzbeispiel 1, jedoch in einem List ORP 6300 Contikneter. Es wurden dem Reaktor 17 t/Std Monomerlösung zugeführt. Die durchschnittliche Verweilzeit des Reaktionsgemisches im Reaktor betrug etwa 14 min. Die Zugabe des Harzpulvers aus Referenzbeispiel 1 erfolgte an einem Dosierpunkt, der 24% der gesamten Verweilzeit im Reaktor entsprach, direkt zwischen Rühr- und Putzwelle. Die Menge des Harzpulvers betrug 26,8 % des Feststoffgehalts des eingesetzten Monomeren. Es bildeten sich größere Mengen an unerwünschten Gelklumpen.

Das Gel wurde getrocknet, gemahlen und durch Sieben wurde eine Korngrößenfraktion von 100 bis 800 µm erhalten. Das getrocknete Polymer besaß eine Zentrifugenretentionskapazität CRC von 36,2 g/g. Der Restmonomergehalt lag bei 950 ppm, der Restvernetzergehalt bei etwa 40 ppm, die extrahierbaren Anteile bei 15 %.

Anschließend wurden 20 g Polymer (Korngrößenfraktion 100-800 µm) in einem Labormischer (Waring-Mischer) mit Mischaufsatz und abgestumpften Mischblättern vorgelegt. Bei eingeschaltetem Mischer und niedriger Umdrehungszahl wurden 1 g Nachvernetzungslösung enthaltend 12 mg Ethylenglykoldiglycidylether gelöst in einer Mischung aus 33 Gew.-% 1,2-Propylenglykol und 67 Gew.-% Wasser zudosiert. Das feuchte Polymerpulver wurde danach dem Mischer entnommen und in einer Petrischale bei 150 DEG C 60 Minuten lang im Umluftschrank getrocknet. Nach Absieben der Grobfraktion (> 800 Mikrometer) wurde das erhaltene Produkt anwendungstechnisch untersucht: CRC: 28 g/g; AUP 0,7psi: 24,0 g/g

### Beispiel 3:

Die Herstellung erfolgte analog dem Vergleichsbeispiel 2. Die Zugabe des partikulären Hydrogel-bildenden Polymermaterials aus Vergleichsbeispiel 1 erfolgte an zwei Dosierpunkten. Die Gesamtmenge des an beiden Dosierzeitpunkten eingefahrenen partikulären hydrogel-bildenden Polymermaterials betrug 26,8 % des Feststoffgehalts des eingesetzten Monomeren: Die erste Dosierung erfolgte-an einem Dosierpunkt, der 24% der gesamten Verweilzeit im Reaktor entsprach, direkt zwischen Rühr- und Putzwelle, die zweite in einem Abstand bei 53 % der gesamten Verweilzeit im Reaktor seitlich auf die Putzwelle. Bei der zweiten Dosierung wurden 4,2 Gew. % des Feststoffgehalts des eingesetzten Monomeren zugegeben. Auffällig war, dass die Menge an Gelklumpen erheblich reduziert wurde.

Das Gel wurde getrocknet, gemahlen und durch Sieben wurde eine Korngrößenfraktion von 100 bis 800 µm erhalten. Das getrocknete Polymer besaß eine Zentrifugenretentionskapazität CRC von 37,5 g/g. Der Restmonomergehalt lag bei 300 ppm, der Restvernetzergehalt bei etwa 20 ppm, die extrahierbaren Anteile bei 10 %.

Die Oberflächennachvernetzung erfolgte analog zum Vergleichsbpispiel 2. Das erhaltene Produkt wies nach Absieben der Grobfraktion (> 800 µm) folgende Spezifikationen auf: CRC: 29 g/g; AUP 0,7psi: 24,9 g/g.

### Referenzbeispiel 4:

Man verwendete einen List ORP 10 Laborkneter mit 5l Vorratsbehälter und Entgasungsmöglichkeit (Stickstoff). Der Knetermantel ist beheizbar, die Wellen sind kühlbar.

Zur Herstellung des Basispolymers wurde eine wässrige Monomerlösung mit einem Feststoffgehalt von 38% und einem Neutralisationsgrad von 75% hergestellt. Die Ansatzgröße betrug 4500 g. Es wurden 347,8 g Acrylsäure (100 Gew.-%ig), 444,0 g Wasser und 3652,0 g wässrige Natriumacrylatlösung (37,3 Gew.-%ig) gemischt. Dieser Mischung wurde mit 4,17 g Polyethylenglykol-400-diacrylat (Cray Vally) (0,3 Gew.-% bezogen auf Acrylsäure) versetzt.

Die Monomerlösung wurde nun in einem 5L Vorlagegefäß 30 min. unter Rühren mit Stickstoff inertisiert. Während des Inertisierens wurde der Knetermantel auf 40°C und die Kneterwellen auf 25°C temperiert. Der Kneterraum wurde mit Stickstoff gespült.

Die inertisierte Monomerlösung wurde nun in den Kneter geleitet und mit Natriumperoxodisulfat (18,55 g einer Gew.-15%igen wässrigen Lösung; 0,2 Gew.-% bezogen auf Acrylsäure) und Wasserstoffperoxid (5,56 g einer 1,25 Gew.-%igen wässrigen Lösung; 0,005 Gew.-%, bezogen auf Acrylsäure) versetzt. Diese Mischung wurde 2 min gemischt und danach mit Ascorbinsäure (27,82.g einer 0,5 Gew.-%igen wässrigen Lösung; 0,01 Gew.-% bezogen auf Acrylsäure) initiiert. Die Drehzahl der Putzwelle war während des Untermischens des Wasserstoffperoxids und des Natriumperoxodisulfates auf 50 rpm eingestellt. Die ersten 2 min nach Initiierung rührte man mit 50 rpm da= nach mit 30 rpm. Ab der Initiierung mit Ascorbinsäure wurde der Knetermantel mit 80°C beheizt.

Das erhaltene Gel wurde nach einer Reaktions.- bzw. Verweilzeit von 15min (gerechnet ab Initiierung) Reaktionszeit ausgetragen und 1,5 Stunden bei 160°C im Umlufttrockenschrank getrocknet. Das getrocknete Polymer wurde in einer Retschmühle (Typ ZM1 Nr.67098) gemahlen und auf eine Fraktion von 150 bis 850 µm abgesiebt.

Die Fraktion mit einer Korngröße von weniger als 150 µm wurde in den Vergleichsbeispielen 5, 8 und den Bespielen 6, 7 in der dort angegebenen Weise und Menge verwendet.

In den Beispielen bzw. Vergleichsbeispielen 5 bis 8 wurden dem Reaktionsgemisch insgesamt 10 Gew.-% Harzpulver und 5 Gew.-% Kaolin (bezogen auf den Feststoffgehalt der Monomerlösung) zugesetzt. Die Zugabe erfolgte an einem oder zwei Dosierpunkten, wie nachstehend angegeben. Die erste Zugabe erfolgte vor Initiierung in die Monomerlösung; die zweite Zugabe erfolgte nach einer Verweilzeit von 14 min (entsprechend 93 % der gesamten Verweilzeit im Reaktor) in das gelförmige Reaktionsgemisch.

### Vergleichsbeispiel 5:

Das Vergleichsbeispiel 5 wurde analog dem Referenzbeispiel 4 durchgeführt. Nach Einleiten der Monomerlösung in den Kneter wurde eine Pulvermischung aus 171 g (10 Gew.-%, bezogen auf den Feststoffgehalt) Harzpulver (erhalten aus Referenzbeispiel 4) und 85,5 g (5 Gew.-% bezogen auf den Feststoffgehalt) Kaolin (CAS Nr. 1332-58-7; J.M. Huber Corporation Atlanta Gorgia 30327 USA Chemtrec No. 800-424-9300 or 703-527-3887) zu der Monomerlösung gegeben.

### Beispiel 6:

Das Beispiel 6 wurde analog dem Referenzbeispiel 4 durchgeführt. Nach Einleiten der Monomerlösung in den Kneter wurde eine Pulvermischung aus 85,5 g (5 Gew.-% bezogen auf den Feststoffgehalt) Harzpulver (erhalten aus Referenzbeispiel 4) und 85,5 g (5'Gew.-% bezogen auf den Feststoffgehalt) Kaolin (siehe vorstehend) der Monomerlösung zugegeben. Zusätzlich wurden 14 min nach Initiierung 85,5 g (5 Gew.-% bezogen auf den Feststoffgehalt) Harzpulver in den Polymerisationsreaktor eingetragen.

### Beispiel 7:

Das Beispiel 7 wurde analog dem Referenzbeispiel 4 durchgeführt. Nach Einleiten der Monomerlösung in den Kneter wurden 171g (10 Gew.-% bezogen auf den Feststoffgehalt) Harzpulver (erhalten aus Referenzbeispiel 4) zu der Monomerlösung gegeben. Zusätzlich wurden 14 min nach Initiierung 85,5 g (5 Gew.-% bezogen auf den Feststoffgehalt) Kaolin (siehe vorstehend) in den Polymerisationsreaktor eingetragen.

### Vergleichsbeispiel 8:

Das Vergleichsbeispiel 8 wurde analog dem Referenzbeispiel 4 durchgeführt. 14 min nach Initiierung wurde eine Pulvermischung aus 171 g (10 Gew.-% bezogen auf den Feststoffgehalt) Harzpulver (erhalten aus Referenzbeispiel 4) und 85,5 g (5 Gew.-% bezogen auf den Feststoffgehalt) Kaolin (siehe vorstehend) in den Polymerisationsreaktor eingetragen.

Die Polymere der Beispiele bzw. Vergleichsbeispiele 5 bis 8 wurden in einer Mühle (Retsch Typ ZM1 Nr.:67098) gemahlen und auf eine Fraktion von 300 bis 600 µm abgesiebt. Man bestimmte die Zentrifugenretentionskapazität (CRC) und extrahierbaren Anteile (Extr) der erhaltenen wasserabsorbierenden Polymere. Um Verfälschungen durch unterschiedlich starke Trocknung auszuschließen, wurden die gefundenen Werte rechnerisch auf einen Feuchtigkeitsgehalt von 0% normiert. Die Ergebnisse sind in der nachstehenden Tabelle angegeben.

| Beispiel | 1. Zugabe | 2. Zugabe | CRC [g/g] | Extr. [%] | CRC/Extr. |
|---|---|---|---|---|---|
| 5* | 10% Harzpulver 5% Kaolin | - | 34,2 | 8,5 | 4,0 |
| 6 | 5% Harzpulver 5% Kaolin | 5% Harzpulver | 35,3 | 8,1 | 4,4 |
| 7 | 10% Harzpulver | 5% Kaolin | 31,0 | 6,2 | 5,0 |
| 8* | - | 10% Harzpulver 5% Kaolin | 31,2 | 4,6 | 6,8 |

| | | | | | |
|---|---|---|---|---|---|
| *Vergleichsbeispiele | | | | | |

Der Quotient CRC/Extr, der als Maß für ein ausgewogenes Verhältnis von hoher Retentionskapazität und niedrigen extrahierbaren Anteilen dient, steigt vom Vergleichsbeispiel 5 zu den erfindungsgemäßen Beispielen 6 und 7 an.

Zur Überprüfung der Einarbeitungsgüte der Additive wurde ein Teil der getrockneten Polymerprobe in einer Schneidmühle (Retsch Typ SM1 ohne Siebeinsatz) bei 1430 rpm grob vorzerkleinert. 200 g der vorzerkleinerten Polymerprobe wurden in eine Porzellan-Mühle (Volumen etwa 785 ml, Innendurchmesser 10 cm, Innenhöhe 10 cm) eingewogen und mit 104 zylindrischen Keramikkörpern (Durchmesser 12,5 mm, Höhe 12,2 mm, Masse 5,15 g) 5 min bei 80 rpm behandelt. Anschließend wurde die Korngrößenverteilung bestimmt. Die Bestimmung erfolgte analog der EDANA Testmethode Nr. 420.2-02 "Particle Size Distribution", wobei folgende Siebe verwendet wurden: 100 µm, 200 µm, 300 µm, 400 µm, 500 µm, 600 µm, 710 µm und 850 µm.

Die Ergebnisse sind in Fig. 1 dargestellt, wobei die Ordinate den Anteil der jeweiligen Teilchengrößenklasse an der Gesamtheit der Teilchen in Gew.-% angibt (ausgefüllte Quadrate: Beispiel 5; nach oben weisende Dreiecke: Beispiel 6; Rauten: Beispiel 7; nach rechts weisende Dreiecke: Beispiel 8).

Man sieht, dass das Vergleichsbeispiel 8 ein Maximum der Korngrößenverteilung bei Teilchen mit 100 bis 200 µm aufweist. Dies ist ein Anzeichen dafür, dass die in diesem Beispiel gebildeten Agglomerate unzureichende mechanische Stabilität aufweisen und bei Beanspruchung verstärkt unerwünschtes Feingut entsteht. Das Maximum bei 100 bis 200 µm deutet darauf hin, dass das Harzpulver nicht ausreichend fest in die Polymermatrix eingebunden wurde. Die Kurve des Vergleichsbeispiels 5 liegt oberhalb der Kurven der anderen Beispiele. Offenbar weist das in diesem Beispiel gebildete Polymer insgesamt eine unzureichende mechanische Stabilität auf, wodurch bei Belastung Teilchen mit einem breiten Teilchengrößenspektrum "herausgebrochen" werden.

## Patentansprüche

1. Verfahren zur Herstellung eines wasserabsorbierenden Harzes durch Polymerisation eines Reaktionsgemisches, das wenigstens ein hydrophiles Monomer und gegebenenfalls wenigstens einen Vernetzer umfasst, in einem Reaktor, bei dem man in das Reaktionsgemisch wenigstens eine erste Portion eines teilchenförmigen Additivs einmischt, bevor das Reaktionsgemisch eine Verweilzeit von 40 % der gesamten Verweilzeit im Reaktor erreicht, und wenigstens eine zweite Portion eines teilchenförmigen Additivs einmischt, wenn das Reaktionsgemisch eine Verweilzeit von 45 % oder mehr der gesamten Verweilzeit im Reaktor erreicht hat, wobei das Additiv unter wasserabsorbierenden Harzpulvern, Füllstoffen in Form feinteiliger, unter den Herstellungsbedingungen des wasserabsorbierenden Harzes inerter, pulverförmiger oder faseriger Stoffe einer mittleren Partikelgröße im Bereich von bis zu 500 µm, gemessen mittels Laserbeugung, und Gemischen davon ausgewählt ist, der Gesamtfeststoffgehalt von Monomeren und Additiv 30 bis 60 Gew.-% beträgt, die Menge des Additivs 5 bis 50 Gew.%, bezogen auf die Monomere, beträgt und das Gewichtsverhältnis der ersten Portion zur zweiten Portion des Additivs 10:1 bis 1:5 beträgt.

2. Verfahren nach Anspruch 1, bei dem man die erste Portion des Additivs einmischt, wenn das Reaktionsgemisch eine Verweilzeit von bis zu 30 % der gesamten Verweilzeit im Reaktor erreicht.

3. Verfahren nach Anspruch 1 oder 2, bei dem man die zweite Portion des Additivs einmischt, wenn das Reaktionsgemisch eine Verweilzeit von 50 bis 99 % der gesamten Verweilzeit im Reaktor erreicht.

4. Verfahren nach einem der vorhergehenden Ansprüche, bei dem man eine wässrige Monomerlösung dem Aufgabeende eines kontinuierlichen betriebenen Reaktors mit wenigstens zwei achsparallel rotierenden Wellen zuführt, worin das Reaktionsgemisch mit fortschreitender Polymerisation vom Aufgabeende zum Ausgabeende des Reaktors befördert wird, und die erste Portion und die zweite Portion des Additivs an zwei in Förderrichtung der Monomerlösung beabstandet zueinander angeordneten Stellen des Reaktors einmischt.

5. Verfahren nach einem der vorhergehenden Ansprüche, bei dem das Harzpulver eine gewichtsmittlere Teilchengröße von weniger als 200 µm aufweist.

6. Verfahren nach einem der vorhergehenden Ansprüche, bei dem das Harzpulver einen Feuchtigkeitsgehalt von 0,1 bis 10 Gew.-% aufweist.

7. Verfahren nach einem der vorhergehenden Ansprüche, bei dem das Harzpulver ein nicht oberflächennachvemetztes Hydrogel, ein oberflächennachvemetztes Hydrogel oder Gemische davon umfasst.

8. Verfahren nach einem der vorhergehenden Ansprüche, bei dem die Menge des Additivs 15 bis 40 Gew.%, bezogen auf die Monomere, beträgt.

9. Verfahren nach einem der vorhergehenden Ansprüche, bei dem das Gewichtsverhältnis der ersten Portion zur zweiten Portion des Additivs 5:1 bis 1:1 1 beträgt.

10. Verfahren nach einem der vorhergehenden Ansprüche, bei dem die Füllstoffe anorganische Teilchen sind.

11. Verfahren nach Anspruch 10, bei dem die anorganische Teilchen unter Tonminerale, Polykieselsäuren, Zeolithe, Aktivkohle, wasserunlösliche Metallphosphate, Metalloxide, Metallcarbonate und Gemischen davon ausgewählt sind.

12. Verfahren nach einem der Ansprüche 1 bis 9, bei dem die Füllstoffe organische Teilchen sind.

13. Verfahren nach einem der vorhergehenden Ansprüche, bei dem die Füllstoffe eine mittlere Teilchengröße von 10 bis 500 µm µm aufweisen.

14. Verfahren nach einem der vorhergehenden Ansprüche, bei dem die erste Portion des Additivs ausschließlich Harzpulver umfasst und die zweite Portion des Additivs ein Gemisch von Harzpulver und Füllstoffen umfasst.

15. Verfahren nach einem der vorhergehenden Ansprüche, bei dem das Reaktionsgemisch 0,01 bis 5 Gew.-% Vernetzer, bezogen auf das hydrophile Monomer, enthält.

16. Verfahren nach einem der vorhergehenden Ansprüche, bei dem das hydrophile Monomer teilneutralisierte Acrylsäure umfasst.

## Claims

1. A process for producing a water-absorbing resin by polymerization of a reaction mixture comprising at least one hydrophilic monomer and optionally at least one crosslinker in a reactor, which comprises admixing the reaction mixture with at least one first portion of a particulate additive before the reaction mixture has reached a residence time of 40% of the overall residence time in the reactor and with at least one second portion of a particulate additive when the reaction mixture has reached a residence time of 45% or more of the overall residence time in the reactor, the additive being selected from water-absorbing resin powders, fillers in the form of finely divided, pulverulent or fibrous materials which are inert under the production conditions of the water-absorbing resin and have an average particle size in the range of up to 500 µm, measured using laser diffraction, and mixtures thereof, the total solids content of monomer and additive being in the range from 30% to 60% by weight, the amount of additive being in the range from 5% to 50% by weight, based on the monomers, and the weight ratio of the first portion to the second portion of the additive being in the range from 10:1 to 1:5.

2. The process according to claim 1 wherein the first portion of the additive is admixed when the reaction mixture has reached a residence time of up to 30% of the overall residence time in the reactor.

3. The process according to claim 1 or 2 wherein the second portion of the additive is admixed when the reaction mixture has reached a residence time in the range from 50% to 99% of the overall residence time in the reactor.

4. The process according to any one of the preceding claims wherein an aqueous solution of monomer is fed to the input end of a continuous operated reactor having at least two axially parallel rotating shafts, in which the reaction mixture is transported from the input end of the reactor to its output end as the polymerization progresses, and the first and second portions of the additive are admixed at two locations of the reactor which are spaced apart in the direction of transport of the monomer solution.

5. The process according to any one of the preceding claims wherein the resin powder has a weight average particle size of less than 200 µm.

6. The process according to any one of the preceding claims wherein the resin powder has a moisture content in the range from 0.1% to 10% by weight.

7. The process according to any one of the preceding claims wherein the resin powder comprises a non-surface-postcrosslinked hydrogel, a surface-post-crosslinked hydrogel or a mixture thereof.

8. The process according to any one of the preceding claims wherein the amount of additive is in the range from 15% to 40% by weight, based on the monomers.

9. The process according to any one of the preceding claims wherein the weight ratio of the first portion to the second portion of the additive is in the range from 5:1 to 1:1.

10. The process according to any one of the preceding claims wherein the fillers are inorganic particles.

11. The process according to claim 10 wherein the inorganic particles are selected from clay minerals, polysilicas, zeolites, activated carbon, water-insoluble metal phosphates, metal oxides, metal carbonates and mixtures thereof.

12. The process according to any one of claims 1 to 9 wherein the fillers are organic particles.

13. The process according to any one of the preceding claims wherein the fillers have an average particle size in the range from 10 to 500 µm.

14. The process according to any one of the preceding claims wherein the first portion of the additive comprises resin powder only and the second portion of the additive comprises a mixture of resin powder and fillers.

15. The process according to any one of the preceding claims wherein the reaction mixture comprises 0.01% to 5% by weight of crosslinker, based on the hydrophilic monomer.

16. The process according to any one of the preceding claims wherein the hydrophilic monomer comprises partially neutralized acrylic acid.

## Revendications

1. Procédé de fabrication d'une résine absorbant l'eau par polymérisation d'un mélange réactionnel qui comprend au moins un monomère hydrophile et éventuellement au moins un agent de réticulation, dans un réacteur, selon lequel au moins une première partie d'un additif particulaire est incorporée dans le mélange réactionnel avant que le mélange réactionnel n'atteigne un temps de séjour de 40 % du temps de séjour total dans le réacteur, et au moins une seconde partie d'un additif particulaire est incorporée lorsque le mélange réactionnel atteint un temps de séjour de 45 % ou plus du temps de séjour total dans le réacteur, l'additif étant choisi parmi les poudres de résines absorbant l'eau, les charges sous la forme de substances pulvérulentes ou fibreuses finement divisées, inertes dans les conditions de fabrication de la résine absorbant l'eau, d'une taille de particule moyenne dans la plage allant jusqu'à 500 µm, mesurée par diffraction laser, et leurs mélanges, la teneur totale en solides des monomères et de l'additif étant de 30 à 60 % en poids, la quantité de l'additif étant de 5 à 50 % en poids, par rapport aux monomères, et le rapport en poids entre la première partie et la seconde partie de l'additif étant de 10:1 à 1:5.

2. Procédé selon la revendication 1, dans lequel la première partie de l'additif est incorporée lorsque le mélange réactionnel atteint un temps de séjour inférieur ou égal à 30 % du temps de séjour total dans le réacteur.

3. Procédé selon la revendication 1 ou 2, dans lequel la seconde partie de l'additif est incorporée lorsque le mélange réactionnel atteint un temps de séjour de 50 à 99 % du temps de séjour total dans le réacteur.

4. Procédé selon l'une quelconque des revendications précédentes, dans lequel une solution aqueuse de monomères est introduite à l'extrémité d'alimentation d'un réacteur exploité en continu comportant au moins deux arbres rotatifs d'axes parallèles, le mélange réactionnel étant déplacé de l'extrémité d'alimentation vers l'extrémité de déchargement du réacteur au fur et à mesure de la polymérisation, et la première partie et la seconde partie de l'additif sont incorporées à deux emplacements distants l'un de l'autre du réacteur dans la direction de déplacement de la solution de monomères.

5. Procédé selon l'une quelconque des revendications précédentes, dans lequel la poudre de résine présente une taille de particule moyenne en poids inférieure à 200 µm.

6. Procédé selon l'une quelconque des revendications précédentes, dans lequel la poudre de résine présente une teneur en humidité de 0,1 à 10 % en poids.

7. Procédé selon l'une quelconque des revendications précédentes, dans lequel la poudre de résine comporte un hydrogel non post-réticulé en surface, un hydrogel post-réticulé en surface ou leurs mélanges.

8. Procédé selon l'une quelconque des revendications précédentes, dans lequel la quantité de l'additif est de 15 à 40 % en poids, par rapport aux monomères.

9. Procédé selon l'une quelconque des revendications précédentes, dans lequel le rapport en poids entre la première partie et la seconde partie de l'additif est de 5:1 à 1:1.

10. Procédé selon l'une quelconque des revendications précédentes, dans lequel les charges sont des particules inorganiques.

11. Procédé selon la revendication 10, dans lequel les particules inorganiques sont choisies parmi les minéraux argileux, les acides polysiliciques, les zéolithes, le charbon actif, les phosphates métalliques insolubles dans l'eau, les oxydes métalliques, les carbonates métalliques et leurs mélanges.

12. Procédé selon l'une quelconque des revendications 1 à 9, dans lequel les charges sont des particules organiques.

13. Procédé selon l'une quelconque des revendications précédentes, dans lequel les charges présentent une taille de particule moyenne de 10 à 500 µm.

14. Procédé selon l'une quelconque des revendications précédentes, dans lequel la première partie de l'additif comprend exclusivement une poudre de résine et la seconde partie de l'additif comprend un mélange d'une poudre de résine et de charges.

15. Procédé selon l'une quelconque des revendications précédentes, dans lequel le mélange réactionnel contient 0,01 à 5 % en poids d'agent de réticulation, par rapport au monomère hydrophile.

16. Procédé selon l'une quelconque des revendications précédentes, dans lequel le monomère hydrophile comprend de l'acide acrylique partiellement neutralisé.
